# EUROPÄISCHE PATENTSCHRIFT

(11) **EP 0 412 425 B1**
(45) Veröffentlichungstag und Bekanntmachung des Hinweises auf die Patenterteilung: **13.11.1996**
(21) Anmeldenummer: 90114781.9
(22) Anmeldetag: 01.08.1990
(51) Int. Cl.: C08G 59/40, C08G 59/42, H01B 3/40, C08G 59/30, C08G 59/32

(54) **Flammwidrige Giessharzformstoffe**
Flame retardant casting resins as moulding compounds
Résines de coulée ignifugées comme matière à mouler

(30) Priorität: 11.08.1989 DE 3926668
(43) Veröffentlichungstag der Anmeldung: 13.02.1991
(73) Patentinhaber: SIEMENS AKTIENGESELLSCHAFT, 80333 München (DE)
(72) Erfinder: Wipfelder, Ernst, Dr., D-8000 München 80 (DE); Plundrich, Winfried, D-8034 Germering (DE)

(56) Entgegenhaltungen:
- EP-A- 0 039 018
- EP-A- 0 291 454
- DE-A- 2 538 675
- US-A- 3 236 863
- US-A- 3 419 642
- US-A- 4 048 141

## Beschreibung

Die Erfindung betrifft ein Gießharz sowie dessen Verwendung für flammwidrige Umhüllungen von elektrischen und elektronischen Bauelementen.

Zur Umhüllung, Einbettung und Abdeckung von aktiven und passiven Bauelementen werden zum Beispiel Gießharze eingesetzt. Zum Schutz der abgedeckten Bauelemente sollen die Gießharze bzw. die gehärteten Gießharzformstoffe möglichst wenig korrosionsfördernde Inhaltsstoffe aufweisen, insbesondere keine ionischen Verunreinigungen. Außerdem sollen sie flammwidrige Eigenschaften aufweisen, um die beim Betrieb elektrischer und elektronischer Geräte immer gegebene Gefahr des Entflammens zu verringern. Doch gerade der Flammschutz ist bei Gießharzformstoffen nicht befriedigend gelöst.

Bekannte Gießharze enthalten zu diesem Zweck zum Beispiel anorganische Zusätze. Verwendung finden dabei vor allem Aluminiumhydroxid, Magnesiumhydroxid, Phosphate, Borate oder auch roter Phosphor. Diese Zusätze haben nachteilige Einflüsse auf die Harzverarbeitung und die thermisch mechanischen Formstoffeigenschaften, insbesondere erhöhen sie die Viskosität und die Sedimentation.

Andere Gießharzformstoffe enthalten organische Zusätze mit flammenwidriger Wirkung. Nachteil dieser zum Beispiel phosphororganischen Verbindungen ist deren Migrationsfähigkeit im gehärteten Gießharzformstoff, da sie nur auf physikalische Art und Weise in der Harzmatrix eingebettet sind. Dies führt beim Betrieb der damit abgedeckten Bauelemente zu einer stetigen Änderung der Eigenschaften der Gießharzformstoffe, welche den Betrieb des Bauelements negativ beeinflussen können.

Einen guten Flammschutz bieten halogenierte, insbesondere bromierte Harzkomponenten, denen häufig Antimontrioxid als synergistisch wirkende weitere Komponente zugefügt ist. Doch gerade im Brandfall werden aus diesen Flammschutzmittels giftige und umweltbelastende Stoffe freigesetzt. Auch ist man bemüht, die Verwendung von Antimontrioxid einzuschränken, seit dessen karzinogene Wirkung erwiesen ist.

Verschiedentlich wurde bereits vorgeschlagen, organische Phosphorverbindungen in Epoxidharze einzubauen, um deren Flammfestigkeit zu erhöhen. Einkomponentige phosphorhaltige Harzsysteme sind beispielsweise aus DE-A-25 38 675 und US-A-3 419 642 bekannt.

Aus der US-3 236 863 ist bekannt, ein mit einer Dicarbonsäure substituiertes Phosphorsäurederivat zusammen mit Anhydriden als Härterkomponente für Epoxidharze einzusetzen.

Aufgabe der vorliegenden Erfindung ist es nun, phosphorhaltige Gießharzsysteme anzugeben, die korrosionsarm, Halogen- und Antimontrioxidfrei sind und die zur Umhüllung von elektrischen und elektronischen Bauelementen geeignet sind.

Außerdem sollen sie gute Verarbeitungseigenschaften besitzen, insbesondere niedrige Viskosität und ausreichende Gebrauchsdauer. Ebenso sind gute mechanische, thermische, elektrische und chemische Eigenschaften gefordert.

Diese Aufgabe wird erfindungsgemäß gelöst durch ein Gießharz mit den Merkmalen von Anspruch 1.

Weitere Ausgestaltungen der Erfindung sind den Unteransprüchen zu entnehmen.

Bei der Erfindung handelt es sich um ein Gießharz, dessen flammwidrige Eigenschaften von einer reaktiven Komponente abgeleitet sind. Das heißt, die eigentlich für den Flammschutz wirksame Phosphorverbindung ist Bestandteil der Härterkomponente. Sie wird beim Aushärten in die Harzmatrix chemisch eingebunden. Diese Einbindung der Phosphorverbindung, chemisch charakterisiert als saurer Ester, erfolgt problemlos, so daß dadurch keine Verschlechterung der übrigen Eigenschaften des festen Gießharzformstoffes beiwkrt wird. Infolge der chemischen Einbindung des sauren Esters in das Polymernetzwerk tritt auch bei späterer Temperaturbelastung des festen Gießharzformstoffes keine Migration des phosphorhaltigen Esters (bzw. der Phosphorverbindung) auf. Das heißt, das flammwidrige Verhalten des Formstoffes bleibt unabhängig von der Zeit erhalten.

Die mit dieser Flammschutzmaßnahme ausgerüsteten Epoxid-Gießharze erfüllen die Anforderungen hinsichtlich Flammwidrigkeit, wie sie für die meisten Anwendungen in der Elektrotechnik und Elektronik benötigt werden. Das Gießharz selbst kann ein beliebiges säure- bzw. anhydridhärtendes System sein. Der saure Ester stellt dabei einen Teil der Härterkomponente dar. Er ergibt in Kombination mit üblicherweise verwendeten Härtern und Beschleunigern lagerstabile Mischungen.

Die Verarbeitung derartiger Mischungen ist aufgrund der noch gut handhabbaren Viskositäten mit den bei Gießharzen gebräuchlichen Apparaturen problemlos möglich. Ein weiterer Vorteil dieser phosphorhaltigen sauren Ester ist ihre beschleunigende Wirkung auf die Polyadditionsreaktion Epoxid-Anhydrid. Ohne Einsatz zusätzlicher Beschleuniger lassen sich günstige Kompromisse zwischen Gebrauchsdauer und Härtungsgeschwindigkeit der Gießharze realisieren.

Auch der gehärtete Gießharzformstoff weist günstige Eigenschaften auf. Neben der bereits erwähnten chemischen und physikalischen Stabilität zeichnet sich ein aus dem erfindungsgemäßen Gießharz hergestellter Formstoff durch eine erhöhte Flexiblität aus. Im Vergleich zu herkömmlichen Gießharzen lassen sich durch die Erfindung Gießharzformstoffe mit einem breiten mechanischen Eigenschaftsprofil herstellen. Sie sind daher besonders zur Umhüllung mechanisch empfindlicher Teile geeignet. Dies sind insbesondere miniaturisierte elektrische und elektronische Bauelemente.

Vorteilhafterweise werden Phosphorverbindungen mit Mono- oder Polyhydroxyalkylgruppen mit Mono- und/oder Dianhydriden zum sauren Ester umgesetzt. Die Phosphorverbindungen sind leicht verfügbar und die sauren Ester einfach darstellbar. In einer Ausführungsform der Erfindung wird ein saurer Ester eingesetzt, dessen Phosphorverbindung zwei Hydroxygruppen, besser zwei Hydroxyalkylgruppen aufweist. Somit kann jede Phosphorverbindung zwei Esterbindungen eingehen, wobei ein zumindest zwei Säuregruppen tragender Ester entsteht. Auf Grund der beiden Säuregruppen wird der saure Ester bei der Härtungsreaktion des Gießharzes in die Polymerkette eingebunden, wobei sich verbesserte mechanische Eigenschaften des Gießharzformstoffes ergeben.

Die eingesetzten Phosphorverbindungen sind Phosphinoxide und gehorchen der Strukturformel I oder Phosphonate der Strukturformel V wie in Anspruch 1 definiert.

Die sauren Ester dieser Hydroxyphosphorverbindungen werden bevorzugt dann in Gießharzen eingesetzt, wenn ein besonders hoher Flammschutz erreicht werden soll.

Die folgende Strukturformel II stellt einen sauren Ester dar, bei dem eine der Strukturformel I gehorchende erste Phosphorverbindung (mit zwei Hydroxyalkylgruppen) mit zwei Monoanhydriden zu einem zwei Säuregruppen tragenden Produkt (Ester) umgesetzt wurde, 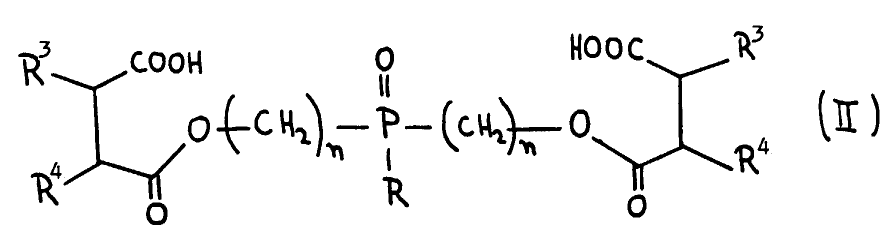 bei dem R³ und R⁴ zum Beispiel im einfachsten Fall H bedeuten.

Doch nicht nur die Phosphorverbindung ist für die flammwidrigen Eigenschaften eines aus dem erfindungsgemäßen Gießharz hergestellten Formstoffes von Bedeutung, sondern auch das den Ester bildende organische Anhydrid. Weitere Verbesserungen im Flammschutz werden erzielt, wenn das Anhydrid von einer aromatischen Di- oder Tetracarbonsäure abgeleitet ist. Das aromatische Gerüst der Carbonsäure kann dabei ein ein- oder mehrkerniger Aromat sein. Die einfachste Spezies dieser Gruppe von Verbindungen stellt Phthalsäureanhydrid dar. Für dieses spezielle und einige weitere Ausführungsbeispiele ergibt sich als weiterer Vorteil, daß das an sich feste Anhydrid durch Überführung in den sauren Ester einer hydroxyfunktionellen Phosphorverbindung in den flüssigen Zustand überführt wird. Dies erleichtert den Einsatz dieser Anhydride in den Härterkomponenten für Gießharze, da bei ausschließlich flüssigen Komponenten eine bessere Mischbarkeit bei gleichzeitiger niedriger Viskosität erzielt wird.

Weitere Beispiele von aromatischen Anhydriden, die zur Bildung der erfindungsgemäß verwendeten sauren Ester verwendet werden, sind Benzol-1,2,4,5-tetracarbonsäuredianhydrid, Benzophenontetracarbonsäuredianhydrid oder Perylen-3,4,9,10-tetracarbonsäure-3,4,9,10-dianhydrid, Naphthalin-1,8-dicarbonsäureanhydrid, Benzoesäureanhydrid oder Biphenyltetracarbonsäuredianhydrid.

Neben den aromatischen Anhydriden werden auch cycloaliphatische, aliphatische und olefinische Anhydride eingesetzt, wie zum Beispiel Hexahydrophthalsäureanhydrid, Methylhexahydrophthalsäureanhydrid, Bernsteinsäureanhydrid, Valeriansäureanhydrid, Isovaleriansäureanhydrid, Hexansäureanhydrid, Pivalinsäureanhydrid, 5-Norbornen-2,3-dicarbonsäureanhydrid, Maleinsäureanhydrid, 2-Dodecen-1-yl-bernsteinsäureanhydrid und Methyltetrahydrophthalsäureanhydrid.

Bei den Gießharzen, die erfindungsgemäß den sauren Ester einer hydroxyfunktionellen Phosphorverbindung enthalten, lassen sich Phosphorgehalte bis ca. 10 Gewichtsprozent, vorzugsweise aber 2,5 bis 5 Prozent (bezogen auf das gesamte Gießharz) erzielen. Dabei kann die Härterkomponente aus bis zu 100 Prozent saurem Ester bestehen. Wenn die Flammfestigkeit eines Gießharzformstoffes auch nicht zu dessen Phosphorgehalt proportional ist, so bewirkt in der Regel ein höherer Phosphorgehalt eine höhere Flammfestigkeit der Formstoffe. Dies kann erfindungsgemäß durch die Zugabe weiterer, mit dem Harz reaktionsfähiger phosphorhaltiger Komponenten erreicht werden, welche niedermolekularer und somit meist niederviskoser sind und daher die Verarbeitungseigenschaften des Gießharzes positiv beeinflussen. Ein gut geeigneter Vertreter einer solchen weiteren reaktiven Komponente ist das Triglycidylphosphat (TGP). Dieses trifunktionelle Epoxid besitzt eine geringe Viskosität von ca. 100 mPas bei Raumtemperatur, laßt sich gut in die Harzmatrix einbinden und kann auf Grund seines hohen Phosphoranteils (11,6 Prozent) auch den Gesamtphosphorgehalt des Gießharzformstoffes wesentlich erhöhen. Dabei wurde festgestellt, daß die wesentliche Flammschutzwirkung vom phosphorhaltigen sauren Ester ausgeht. TGP ist hinsichtlich Flammschutzwirkung deutlich niedriger einzustufen. So ergeben nur mit TGP als Flammschutzmittel ausgestattete Gießharzformstoffe bedeutend niedrigere Flammfestigkeitsklassifizierungen.

Alternativ zum TGP können Diglyciclylphosphonate entsprechend der Strukturformel III eingesetzt werden, 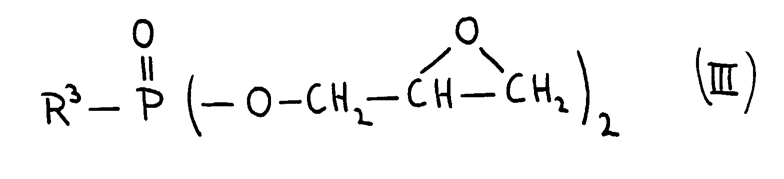 mit R³ = Alkyl-, Aminoalkyl- oder Arulrest, z.B. also Bis(2,3-Epoxipropyl)phenylphosphonat.

Eine weitere Möglichkeit, Phosphor in das Polymernetzwerk einzubauen, bieten phosphorhaltige Anhydride, wie zum Beispiel Triphenylphosphoranylidenbernsteinsäureanhydrid (Struktur IV). 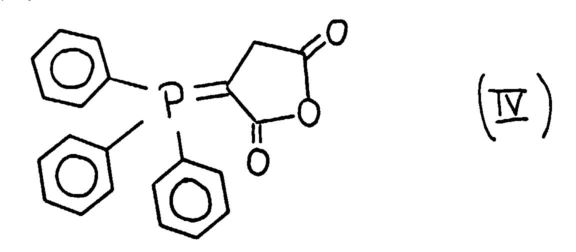 Zusätzlich zu den oben erwähnten reaktiven Phosphorverbindungen können natürlich auch noch weitere flammhemmende Additive wie zum Beispiel Aluminiumhydroxid, Magnesiumhydroxid usw. dem Gießharz zugesetzt werden.

Es ist bekannt, daß für einen ausreichenden Flammschutz bei alleinigem Einsatz derartiger Füllstoffe bis 60 Gewichtsprozent Füllstoffanteil im Gießharzformstoff erforderlich sind. Beim erfindungsgemäßen Gießharz genügen bereits Gehalte kleiner 20 Prozent.

Im folgenden wird die Erfindung anhand allgemeiner Verfahrensvorschriften und eines konkreten Ausführungsbeispiels näher erläutert.

### Herstellung der sauren Ester:

Die phosphorhaltigen sauren Ester werden bei Reaktionstemperaturen von 90 bis 120°C durch Umsetzen der hydroxyfunktionellen Phosphorverbindungen mit den entsprechenden Anhydriden erhalten. Die Reaktion kann zum Beispiel durch Infrarotspektroskopie (Abnahme der Anhydrid-Bande) und durch Bestimmung der jeweiligen Säurezahl verfolgt werden. Nach zwei bis fünf Stunden ist die Reaktion beendet. Nach dieser allgemeinen Vorschrift werden zum Beispiel verschiedene saure Ester der folgenden phosphororganischen Verbindungen hergestellt:
Diethyl-N,N-bis(2-hydroxyethyl)aminomethylphosphonat sek.-Butyl-bis-(2-hydroxyethyl)-phosphinoxid (BPO) oder 2-Hydroxyethanphosphonsäuredimethylester.

### Beispiele für damit umgesetzte Anhydride sind:

Hexahydrophthalsäureanhydrid (HHPSA);
Bernsteinsäureanhydrid (BSA) oder
Phthalsäureanhydrid (PSA).

### Herstellung von Triglycidylphosphat (TGP):

Ausgangsprodukte für die Herstellung von TGP sind Phosphorylchlorid und Glycidol, die entsprechend folgender Reaktionsgleichung 1 zum TGP unter Abspaltung von Chlorwasserstoff zum TGP reagieren: 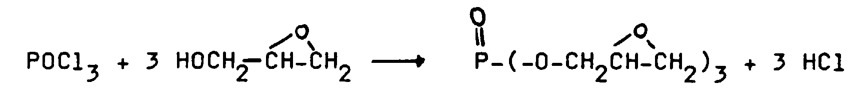 TGP wird in hoher Ausbeute und reiner Form (Chloridgehalt <10 ppm) auf einfache Weise erhalten.

### 1. Ausführungsbeispiel:

Durch Veresterung des Phosphinoxids BPO mit Phthalsäureanhydrid im Molverhältnis 1 : 2 wird ein saurer Ester hergestellt. 89 Masseteile dieses Esters werden mit 100 Masseteilen eines Bisphenol-A-Diglycidylethers (Epoxidwert 0,52 Mol/100g), 23 Masseteilen des Anhydrids HHPSA und 45 Masseteilen des Füllstoffes Aluminiumhydroxid bei 80° gemischt. Nach Entgasung wird in eine entsprechende Gießform gefüllt, dann zwei Stunden bei 110°C und schließlich zwei Stunden bei 150°C gehärtet.

Mit diesem Gießharz werden genormte Prüfstäbe hergestellt und der Flammschutzprüfung gemäß der Underwriters Laboratories UL94V0 unterworfen. Der erfindungsgemäße Gießharzformstoff erfüllt obige Flammfestigkeitsspezifikation bis zu einer Probendicke von 1,6 mm.

Die angegebenen Ausgangsverbindungen für ein erfindungsgemäßes Gießharz können naturgemäß nur einen Teil des Erfindungsgedankens abdecken. Mit den angegebenen Voraussetzungen kann eine Vielzahl weiterer saurer Ester hergestellt werden, die mit beliebigen Epoxidharzen flammwidrige Gießharzformstoffe ergeben. Der chemische Einbau der sauren Ester in die Harzmatrix des Gießharzformstoffes zeigt keinen nachteiligen Einfluß auf die übrigen physikalisch/chemischen Eigenschaften des Formstoffes.

Weitere vorteilhafte Merkmale des Gießharzformstoffes sind die gute Hydrolysebeständigkeit, die E-Korrosionsarmut und die breite Variabilität bei der Einstellung des mechanischen Eigenschaftsprofils. Der Gießharzformstoff eignet sich deshalb hervorragend zur Umhüllung, Einbettung, Abdeckung usw. von elektrischen und elektronischen Bauelementen.

### 2. Ausführungsbeispiel

Bernsteinsäureanhydrid (BSA) und das Phosphinoxid BPO werden im Molverhältnis 2 : 1 bei 110°C zum sauren Ester umgesetzt. 45,8 Masseteile dieses Esters werden dann mit 53,3 Masseteilen eines Bisphenol-A-Diglycidylethers (Epoxidwert 0,52 Mol/100 g), 7,1 Masseteile des Anhydrids HHPSA und 18,8 Masseteile des Füllstoffes Aluminiumhydroxid bei 80°C gemischt. Die Harzformulierung weist nach 5 Minuten Mischen und Entgasen bei 80°C eine Viskosität von 640 mPas und eine Gebrauchsdauer von 25 Minuten auf.

Nach Füllen einer entsprechenden Gießform mit dem Gießharz wird dann 2 Stunden bei 110°C und 2 Stunden bei 150°C gehärtet.

Der erfindungsgemäße Gießharzformstoff erfüllt die UL94V0Flammfestigkeitsspezifikation bis zu einer Probendicke von 1,6 mm.

### 3. Ausführungsbeispiel

Durch Abmischen bei 80°C und 5-minütigem Rühren und Entgasen von 21,0 Masseteilen eines Bisphenol-A-Triglycidylethers (Epoxidwert 1,0 Mol/100 g), 10,5 Masseteilen eines Bisphenol-A-Diglycidylethers (Epoxidwert 0,52 Mol/100 g), 0,3 Masseteilen des Beschleunigers 1-Cyanoethyl-2phenylimidazol, 21,1 Masseteilen des Füllstoffes Aluminiumhydroxid, 52,6 Masseteilen des sauren Esters, hergestellt durch Veresterung des Phosphinoxids BPO mit Bernsteinsäureanhydrid im Verhältnis 1 : 2, und anschließendes Einfüllen in eine entsprechende Gießform werden nach dem Aushärten(2 Stunden bei 110°C und 2 Stunden bei 150°C) Prüfstäbe hergestellt.

Diese Prüfstäbe erfüllen gemäß der Underwriters Laboratories die Flammschutzprüfung nach UL94V0 bis zu einer Probendicke von 0,8 mm.

### 4. Ausführungsbeispiel

Durch Veresterung des Phosphinoxids BPO mit Maleinsäureanhydrid im Molverhältnis 1 : 2 wird bei 90°C ein saurer Ester hergestellt. 86,2 Masseteile dieses Esters werden mit 100,0 Masseteilen eines niederviskosen Bisphenol-F-Diglycidylethers (Epoxidwert 0,615 Mol/100 g), 26,6 Masseteilen des Anhydrids HHPSA und 53,2 Masseteilen des Füllstoffes Aluminiumhydroxid bei 60°C gemischt.

Dieses Gießharz weist nach 5 Minuten Rühren und Entgasen ausgezeichnete Verarbeitungseigenschaften auf. Erhalten wird bei 60°C eine Viskosität von 1480 mPas mit einer Gebrauchsdauer, das heißt Verdoppelung der Ausgangsvikosität, von 28 Minuten. Das sehr gut zu verarbeitende Gießharz wird in eine entsprechende Gießform gefüllt und dann 2 Stunden bei 110°C und schließlich 2 Stunden bei 150°C gehärtet.

Ausgehärtete Probekörper zeigen sehr gute chemische Formstoffeigenschaften, wie bestandene E-Korrosionsprüfung nach DIN 53489, sehr geringe Wasseraufnahme- und sehr gute Hydrolysebeständigkeitswerte.

Dieser erfindungsgemäße Gießharzformstoff erfüllt die UL94V0Flammfestigkeitsspezifikation gemäß der Underwriters Laboratories bis zu einer Probendicke von 1,6 mm.

### 5. Ausführungsbeispiel

Durch Abmischen bei 60°C und 5-minütigem Rühren und Entgasen von 100,0 Masseteilen eines Bisphenol-A-Triglycidylethers (Epoxidwert 1,0 Mol/100 g), 100,0 Masseteilen eines Propanphosphonsäurediglycidylesters (Epoxidwert 0,81 Mol/100 g), 129,8 Masseteilen des Füllstoffes Aluminiumhydroxid, 107,5 Masseteilen des Anhydrids HHPSA und 212,0 Masseteilen des sauren Esters wie im Ausführungsbeispiel 4 beschrieben werden Gießharze erhalten, die bei 60°C eine Viskosität von 800 mPas aufweisen. Die Gebrauchsdauer, also Verdoppelung der ursprünglichen Viskosität beträgt 22 Minuten. Erst nach 37 Minuten bei 60°C werden 3000 mpas erreicht. Dieses sehr gut verarbeitbare Gießharz wird 2 Stunden bei 110°C und 2 Stunden bei 150°C gehärtet.

Genormte Prüfstäbe zeigen ausgezeichnete flammschutzhemmende Eigenschaften. Sie erfüllen die UL94V0-Flammschutzspezifikation sogar bis zu einer Probendicke von 0,8 mm.

### 6. Ausführungsbeispiel

Die im Ausführungsbeispiel 5 beschriebene Harzformulierung, jedoch ohne Füllstoff Aluminiumhydroxid, zeigt noch günstigere Verarbeitungseigenschaften und ebenfalls ausgezeichnetes Flammschutzverhalten.

Der erfindunglsgemäße Gießharzformstoff, dessen Prüfstäbe bei 2 Stunden 110°C und 2 Stunden 150°C ausgehärtet werden, besteht also ohne Füllstoff die Flammschutzprüfung gemäß der Underwriters Laboratories UL94V0 bis zu einer Probendicke von 1,6 mm.

### Wertung der besten Gießharzmischung (Formulierung)

Als besonders vorteilhafte Gießharzmischung hat sich die in Beispiel 4 aufgeführte erwiesen, da der erfindungsgemäße Vorteil in erster Linie in den sehr guten Verarbeitungseigenschaften (Gießharz läßt sich leicht und problemlos verarbeiten) bei gleichzeitig guten chemischen Formstoffeigenschaften, wie bestandener E-Korrosion nach DIN 53489, geringe Wasseraufnahme, ausgezeichnete Hydrolysebeständigkeit und nicht zuletzt der guten Flammschutzwirkung (halogenfrei) liegt.

Noch günstigere Verarbeitungseigenschaften lassen sich erzielen, wenn wie in Beispiel 5 ein sehr niederviskoses phosphorhaltiges Epoxid, das gleichzeitig als "Verdünner" bzw. "zusätzlicher Flammschutz" eingesetzt wird.

## Patentansprüche

1. Gießharz, insbesondere zur flammwidrigen Umhüllung von elektrischen und elektronischen Bauelementen, mit einer Epoxidkomponente und einer Härterkomponente, bei dem die Härterkomponente den sauren Ester einer ersten Phoshorverbindung mit einem organischen Anhydrid umfaßt, wobei die erste Phoshorverbindung
- ausgewählt ist aus Phosphonaten der allgemeinen Struktur V, und aus Phosphinoxiden der allgemeinen Struktur I: 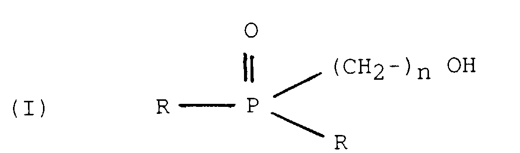 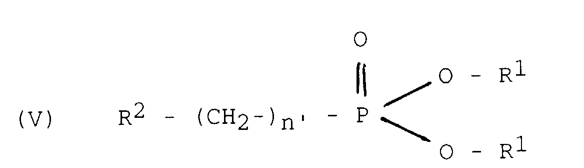 wobei R eine Alkyl-, Aryl- oder Hydroxyalkylgruppe mit 1 bis 10 C-Atomen darstellt und n eine ganze Zahl mit 1 ≤ n ≤ 6 ist, 1 ≤ n' ≤ 4 ist, R¹ gleich Alkyl und R² Hydroxyalkyl oder Hydroxyalkylamino ist,
- zumindest eine Hydroxyalkylgruppe aufweist,
und wobei die Esterbildung über die Hydroxyalkylgruppe erfolgt ist.

2. Gießharz nach Anspruch 1,
bei dem die erste Phosphorverbindung mindestens zwei Hydroxyalkylgruppen aufweist.

3. Gießharz nach einem der Ansprüche 1 oder 2,
bei dem das organische Anhydrid ein aromatisches Anhydrid ist.

4. Gießharz nach einem der Ansprüche 1 bis 3,
bei dem das organische Anhydrid von einer aromatischen Di- oder Tetracarbonsäure abgeleitet ist.

5. Gießharz nach einem der Ansprüche 1 bis 4,
in dem ein weiterer reaktiver phosphorhaltiger Zusatz enthalten ist.

6. Gießharz nach Anspruch 5,
bei dem der weitere Zusatz ausgewählt ist aus Triglycidylphoshat und einem Diglycidylphosphonat der allgemeinen Struktur III:

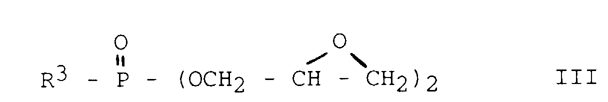

7. Gießharz nach einem der Ansprüche 1 bis 6,
welches außerdem Füllstoffe enthält.

8. Gießharz nach Anspruch 7,
welches bis 20 Gewichtsprozent Füllstoff enthält, welche ausgewählt sind aus Aluminiumhydroxid und Magnesiumhydroxid.

9. Verwendung des Gießharzes nach einem der vorangehenden Ansprüche zur Umhüllung, Abdeckung oder Einbettung von elektronischen Bauelementen.

## Claims

1. Casting resin, in particular for flame-retardant enveloping of electrical and electronic components, having an epoxide component and a hardener component, in which the hardener component comprises the acid ester of a first phosphorus compound with an organic anhydride, the first phosphorus compound
- being chosen from the group consisting of phosphonates of the general structure V and of phosphine oxides of the general structure I: 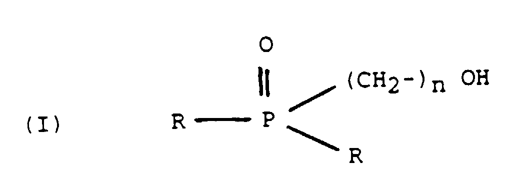 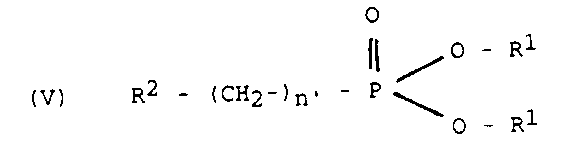 wherein R is an alkyl, aryl or hydroxyalkyl group having 1 to 10 C atoms and n is an integer, where 1 ≤ n ≤ 6, 1 ≤ n' ≤ 4, R¹ is alkyl and R² is hydroxyalkyl or hydroxyalkylamino,
- containing at least one hydroxyalkyl group, and the ester formation taking place via the hydroxyalkyl group.

2. Casting resin according to Claim 1, in which the first phosphorus compound contains at least two hydroxyalkyl groups.

3. Casting resin according to one of Claims 1 or 2, in which the organic anhydride is an aromatic anhydride.

4. Casting resin according to one of Claims 1 to 3, in which the organic anhydride is derived from an aromatic di- or tetracarboxylic acid.

5. Casting resin according to one of Claims 1 to 4, which comprises a further reactive phosphorus-containing additive.

6. Casting resin according to Claim 5, in which the further additive is chosen from the group consisting of triglycidyl phosphate and a diglycidyl phosphonate of the general structure III:

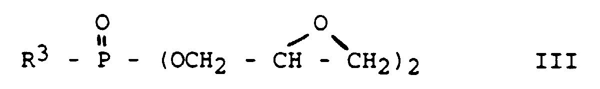

7. Casting resin according to one of Claims 1 to 6, which furthermore comprises fillers.

8. Casting resin according to Claim 7, which comprises up to 20% by weight of fillers which are chosen from the group consisting of aluminium hydroxide and magnesium hydroxide.

9. Use of the casting resin according to one of the preceding claims for enveloping, covering or embedding electronic components.

## Revendications

1. Résine de coulée, en particulier pour le revêtement ignifuge d'éléments de structure électriques et électroniques, avec un composant époxyde et un composant durcissant, dans laquelle le composant durcissant englobe l'ester acide d'un premier composé du phosphore avec un anhydride organique, où le premier composé du phosphore
- est choisi parmi les phosphonates de structure générale V, et parmi les phosphineoxydes de structure générale I : 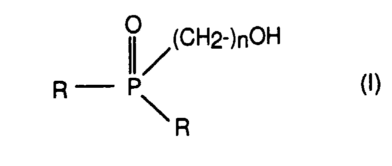 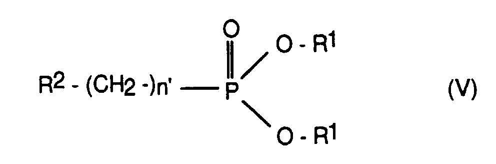 où R représente un radical alkyle, aryle ou hydroxyalkyle avec 1 à 10 atomes C et n est un nombre entier avec 1 ≤ n ≤ 6, 1 ≤ n' ≤ 4, R¹ égale alkyle et R² est hydroxyalkyle ou hydroxyalkylamino,
- présente au moins un radical hydroxyalkyle,
et où la formation de l'ester se fait par le radical hydroxyalkyle.

2. Résine de coulée suivant la revendication 1, dans laquelle le premier composé du phosphore présente au moins deux radicaux hydroxyalkyle.

3. Résine de coulée suivant l'une quelconque des revendications 1 et 2, dans laquelle l'anhydride organique est un anhydride aromatique.

4. Résine de coulée suivant l'une quelconque des revendications 1 à 3, dans laquelle l'anhydride organique dérive d'un acide di- ou tétracarboxylique aromatique.

5. Résine de coulée suivant l'une quelconque des revendications 1 à 4, laquelle contient un autre additif réactif, contenant du phosphore.

6. Résine de coulée suivant la revendication 5, dans laquelle l'autre additif est choisi parmi le phosphate de triglycidyle et un phosphonate de diglycidyle de structure générale III :

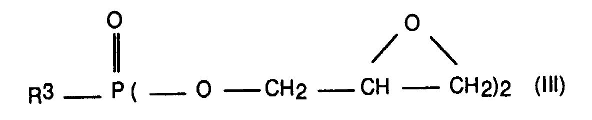

7. Résine de coulée suivant l'une quelconque des revendications 1 à 6, laquelle contient également une charge.

8. Résine de coulée suivant la revendication 7, laquelle contient jusqu'à 20% en poids de charge, celle-ci étant choisie parmi l'hydroxyde d'aluminium et l'hydroxyde de magnésium.

9. Utilisation de la résine de coulée suivant l'une quelconque des revendications précédentes, pour le revêtement, l'enrobage ou la couverture d'éléments de structure électroniques.
